# EUROPEAN PATENT APPLICATION

(11) **EP 4 573 983 A1**
(43) Date of publication of application: **25.06.2025**
(21) Application number: 23217581.0
(22) Date of filing: 18.12.2023
(51) Int. Cl.: A47J 31/42, A47J 42/50

(54) **GROUND COFFEE DISPENSING DEVICE AND COFFEE MACHINE COMPRISING THE SAME**

(71) Applicant: Versuni Holding B.V., 5656 AE Eindhoven (NL)
(72) Inventor: PAPE, Gerdjan, 5656 AE Eindhoven (NL); MATTHIJSSEN, Tijn, 5656 AE Eindhoven (NL)
(74) Representative: Vollering, Stefanus Franciscus Maria

(57) **Abstract**

Provided is a ground coffee dispensing device (100) for dispensing ground coffee into a coffee brewing vessel (102). The ground coffee dispensing device comprises a receptacle (120) having an outlet through which ground coffee is deliverable from the receptacle. A shutter (126) is movable between an open position that allows the ground coffee to be delivered via the outlet and a closed position that blocks delivery of ground coffee via the outlet. A position determination element (130) is arranged to be triggered by the outlet and the coffee brewing vessel adopting a defined position relative to each other. A shutter mover (132) is arranged to cause movement of the shutter from the closed position to the open position in response to the position determination element being triggered. The defined position permits delivery of ground coffee into the coffee brewing vessel when the shutter is in the open position. Further provided is a coffee machine (116) comprising the ground coffee dispensing device.

## Description

### FIELD OF THE INVENTION

The invention relates to a ground coffee dispensing device. The invention further relates to a coffee machine comprising such a ground coffee dispensing device.

### BACKGROUND OF THE INVENTION

It is well known that coffee made from freshly ground beans gives better quality than pre-ground coffee. Often, fresh beans are used when making espresso coffee.

There are many different types of commercially available coffee machines. Coffee machines can vary in terms of how much a user is required to interact with the coffee machine during use.

In a manual espresso machine, the user fills a coffee brewing vessel, known as a portafilter, with coffee grounds. The user then tamps the coffee grounds within the portafilter with sufficient pressure to create a so-called puck of ground coffee. The portafilter containing the puck is mounted to the coffee machine, usually via a bayonet-type coupling. Next, the coffee machine drives hot water through the puck and the resulting coffee is dispensed via a spout that is typically integrated in the portafilter. After brewing, the user is required to disconnect the portafilter from the coffee machine, and empty the portafilter, throwing away the used coffee grounds.

There are also manual espresso machines with an integrated grinder. In such machines, the portafilter may be movable by the user between a first position where it receives ground coffee and a second position where coffee is brewed. Tamping may be done manually or via a manually operated lever.

In a fully automatic espresso machine, all of the above-mentioned steps are done automatically, in one and the same machine. The machine comprises a bean container and a grinder, to make the coffee grounds. These grounds are transported into a brew chamber and tamped automatically, via a piston that may be hydraulically actuated or actuated via an electromotor. Next, hot water is driven through the coffee grounds in the brew chamber, coffee is brewed and dispensed, and the used coffee grounds are discharged from the brew chamber into a waste bin within the machine. By these steps being implemented automatically, the fully automatic espresso machine can save the user time. Moreover, consistent results are achievable due to the machine being capable of implementing the steps more repeatably than a user.

A challenge common to each of these types of coffee machine, and also standalone coffee grinders, is ensuring that ground coffee is reliably delivered into the coffee brewing vessel, in a way that minimizes coffee grounds pollution/spillage.

In the case of manual espresso machines and coffee grinders, coffee grounds pollution may be visible during normal use, in particular on the device itself and/or in an area surrounding the device. The user may therefore be burdened with having to clean up the spilled coffee grounds during or after use of the device. Spillage of coffee grounds is thus considered as nuisance, and also as a waste of resources, and may lead to low repeatability and reproducibility scores.

In fully automatic coffee machines, such pollution may be within the coffee machine. Whilst the user may not be able to see such pollution during normal use of the coffee machine, build-up of coffee grounds pollution inside the coffee machine is plainly undesirable, and may eventually compromise reliable operation of the coffee machine.

### SUMMARY OF THE INVENTION

The invention is defined by the claims.

According to examples in accordance with an aspect of the invention, there is provided a ground coffee dispensing device for dispensing ground coffee into a coffee brewing vessel, the ground coffee dispensing device comprising: a receptacle having an outlet through which ground coffee is deliverable from the receptacle; a shutter movable between an open position that allows the ground coffee to be delivered via the outlet and a closed position that blocks delivery of ground coffee via the outlet; a position determination element arranged to be triggered by the outlet and the coffee brewing vessel adopting a defined position relative to each other; and a shutter mover arranged to cause movement of the shutter from the closed position to the open position in response to the position determination element being triggered, the defined position and the shutter being in the open position permitting delivery of ground coffee into the coffee brewing vessel via the outlet.

The capability of the shutter to block the outlet, e.g. chute opening, when adopting the closed position may assist to minimize or prevent unintentional egress of residual coffee grounds from the receptacle and concomitant pollution of the ground coffee dispensing device, a coffee machine in which the ground coffee dispensing device may be included, and/or an area surrounding the ground coffee dispensing device.

The shutter may serve an additional purpose in embodiments in which the ground coffee dispensing device is included in a coffee machine together with a heated water dispenser. In this respect, the shutter may assist to restrict ingress of steam into the receptacle. Limiting passage of moisture into the receptacle in this manner may assist to enhance reliability of ground coffee delivery.

By the delivery of ground coffee via the outlet being implemented according to a defined spatial relationship between the outlet and the coffee brewing vessel, management of coffee grounds delivery may be enhanced. In particular, pollution of the ground coffee dispensing device, a coffee machine in which the ground coffee dispensing device may be included, and/or an area surrounding the ground coffee dispensing device by coffee grounds may be alleviated due to the movement of the shutter from the closed position to the open position being contingent on adoption of the defined position of the outlet and the coffee brewing vessel relative to each other.

In some embodiments, the ground coffee dispensing device comprises a guiding assembly configured to guide movement of the coffee brewing vessel and the outlet relative to each other in order to bring the coffee brewing vessel and the outlet into the defined position. Such a guiding assembly may provide a convenient way of facilitating arrangement of the outlet and the coffee brewing vessel in the defined position.

The guiding assembly can be configured in any suitable manner in order to guide movement of the coffee brewing vessel and the outlet relative to each other.

In some embodiments, the guiding assembly is configured to guide movement of the coffee brewing vessel, e.g. in the form of a portafilter, relative to a fixed position of the outlet.

Alternatively, the guiding assembly may be configured to guide movement of the receptacle relative to a fixed position of the coffee brewing vessel in order to bring the outlet and the coffee brewing vessel into the defined position relative to each other.

In some embodiments, the guiding assembly comprises a carrier for carrying the coffee brewing vessel, e.g. portafilter, and a carrier movement assembly for guiding the carrier, together with the coffee brewing vessel, towards the outlet.

In such embodiments, the carrier movement assembly may include runner(s) and/or rail(s) for enabling sliding movement of the carrier.

In alternative embodiments, the carrier is omitted. For example, the coffee brewing vessel may itself be slidable along runner(s) and/or rail(s) included in the guiding assembly.

In some embodiments, the movement guided by the guiding assembly comprises translational movement of the coffee brewing vessel and the outlet relative to each other. Such a translational movement may, for example, comprise a linear translational movement and/or an arcuate translational movement.

It is noted that the coffee brewing vessel may not itself be required to move in order for the defined position to be adopted. For example, the coffee brewing vessel's position may be fixed, e.g. by the coffee brewing vessel being statically mountable in a coffee machine, but with the receptacle being movable to bring the outlet to the defined position.

Such movement of the receptacle can be implemented in any suitable manner. In some embodiments, the receptacle, e.g. chute, is pivotably mounted, with pivoting of the receptacle, e.g. chute, towards the coffee brewing vessel enabling adoption of the defined position.

It is generally noted that the coffee brewing vessel may be manually movable by the user, e.g. while being guided by the guiding assembly, and/or may be movable by a suitable movement mechanism, e.g. an electric and/or hydraulic movement mechanism, for driving movement of the coffee brewing vessel and/or the receptacle/outlet towards each other to adopt the defined position.

The position determination element and the shutter mover can have any suitable design provided that the position determination element is triggerable by, in other words in response to, the outlet and the coffee brewing vessel adopting the defined position relative to each other, and the shutter mover is capable of moving the shutter from the closed position to the open position in response to the position determination element being triggered.

In some embodiments, the position determination element comprises a sensor for sensing adoption of the defined position, and a controller adapted to control the shutter mover, e.g. an electromechanical shutter actuator, to move the shutter from the closed position to the open position based on data from the sensor being indicative of adoption of the defined position.

In such embodiments, any suitable sensor may be employed for the position determination element. For example, an optical sensor arranged to optically sense adoption of the defined position, e.g. by a light beam being interrupted by the coffee brewing vessel and/or the receptacle reaching a position corresponding to the defined position.

Alternatively or additionally, the position determination element and the shutter mover may be arranged to mechanically determine adoption of the defined position and move the shutter from the closed position to the open position.

Such mechanically-implemented position determination and shutter actuation may be more cost-effective to implement than, for example, the above-described solution utilizing a sensor- and controller-comprising position determination element, and an electromechanical shutter actuator.

In some embodiments, the position determination element comprises a lever member, with the shutter mover being arranged to cause movement of the shutter from the closed position to the open position in response to movement of the lever member caused by adoption of the defined position. In other words, the shutter mover may transfer the movement of the lever member to the shutter in order to cause the shutter to open.

This may provide a relatively simple and robust way of implementing the position determination element and shutter mover.

In some embodiments, the guiding assembly comprises a contact portion arranged to bear against the lever member when the outlet and the coffee brewing vessel adopt the defined position relative to each other.

In some embodiments, the shutter mover comprises a pivot arranged to enable pivoting of the shutter to open and close the outlet. This may provide a relatively straightforward and reliable way of moving the shutter.

In other embodiments, the shutter mover is configured to cause movement(s) of the shutter other than pivoting, such as sliding of the shutter, in order to cause the shutter to adopt the open position.

In at least some embodiments, the ground coffee dispensing device comprises a biasing element arranged to bias the shutter into the closed position, with the position determination element and the shutter mover being arranged to enable the bias to be overcome when the outlet and the coffee brewing vessel adopt the defined position relative to each other. Thus, the default position adopted by the shutter may be the closed position.

In this way, unintentional egress of residual coffee grounds from the receptacle and, for example, steam ingress into the receptacle may be minimized or prevented when the ground coffee dispensing device is not being used to dispense ground coffee into the coffee brewing vessel.

Any suitable type of biasing element can be contemplated for biasing the shutter into the closed position. In some embodiments, the biasing element comprises, e.g. is in the form of, a spring.

The spring, in other words return spring, used as the biasing element can be of any suitable type. In some embodiments, the spring is a torsion spring. Such a torsion spring may be particularly suitable in embodiments in which the shutter is pivotable between the open position and the closed position.

More generally, relative movement of the coffee brewing vessel and the outlet so that the defined position is no longer adopted, for example by moving the coffee brewing vessel away from the outlet following delivery of the ground coffee into the coffee brewing vessel, may cause the shutter to adopt the closed position. This reversion to the closed position can, for example, be implemented by the biasing element.

In some embodiments, the shutter mover is arranged such that during relative movement of the coffee brewing vessel and the outlet away from the defined position, the shutter is closed completely while the coffee brewing vessel and the outlet are still positioned to enable the ground coffee to be delivered into the coffee brewing vessel.

This may assist to minimize the risk of spillage of coffee grounds.

In some embodiments, the ground coffee dispensing device comprises a coffee grinding assembly for grinding coffee beans to provide the ground coffee that is deliverable from the receptacle. In such embodiments, the receptacle, e.g. chute, may extend beneath the coffee grinding assembly to enable the ground coffee provided by the coffee grinding assembly to move away from the coffee grinding assembly at least partly by gravity.

The coffee brewing vessel, e.g. portafilter, may be included in the ground coffee dispensing device. Thus, the user may be conveniently supplied with the ground coffee dispensing device together with the coffee brewing vessel, e.g. portafilter, in which the ground coffee dispensed by the ground coffee dispensing device is receivable.

Owing to the possibility of the coffee brewing vessel, e.g. portafilter, being a portable component that is manipulable separately from the remainder of the ground coffee dispensing device, it is also contemplated that the ground coffee dispensing device is provided to the user without the coffee brewing vessel. In this case, the coffee brewing vessel may be already in the possession of the user, and/or acquirable by the user separately from the ground coffee dispensing device.

In some embodiments, the coffee brewing vessel comprises a cavity in which the ground coffee is receivable, with a wall extending around the cavity. The receptacle's outlet may be delimited by a further wall. In such embodiments, the defined position may comprise alignment of the wall and the further wall so that the wall and the further wall guide the ground coffee delivered from the receptacle into the cavity.

This alignment between the wall and the further wall may assist to minimize or prevent pollution of the ground coffee dispensing device, a coffee machine in which the ground coffee dispensing device may be included, and/or an area surrounding the ground coffee dispensing device by coffee grounds.

In some embodiments, the ground coffee dispensing apparatus includes a locking mechanism configured to retain the coffee brewing vessel and the outlet at the defined position relative to each other while the ground coffee is being delivered into the coffee brewing vessel.

This locking mechanism may further assist in minimizing or avoiding of coffee grounds pollution because the locking mechanism may mitigate the risk of relative movement away from the defined position while the ground coffee is being delivered into the coffee brewing vessel.

According to another aspect there is provided a coffee machine comprising a heated water dispenser, and the ground coffee dispensing device according to any of the embodiments described herein.

In some embodiments, arrangement of the coffee brewing vessel relative to the heated water dispenser and relative to the ground coffee dispensing device is configurable to enable switching between: a ground coffee dispensing configuration in which the coffee brewing vessel and the outlet of the receptacle adopt the defined position; and a coffee brewing configuration in which a water outlet of the heated water dispenser and the coffee brewing vessel are positioned relative to each other so that heated water is deliverable into the coffee brewing vessel.

In such embodiments, the guiding assembly may be configured to guide movement of coffee brewing vessel relative to the outlet of the receptacle and relative to the water outlet of the heated water dispenser to enable switching between the ground coffee dispensing configuration and the coffee brewing configuration.

According to a further aspect there is provided a method for dispensing ground coffee into a coffee brewing vessel using a ground coffee dispensing device that comprises a receptacle having an outlet, a movable shutter, a position determination element, and a shutter mover. The method comprises bringing the coffee brewing vessel and the outlet into a defined position relative to each other in order to trigger the position determination element, with triggering of the position determination element causing the shutter mover to move the shutter from a closed position to an open position so that the ground coffee is dispensed into the coffee brewing vessel.

The ground coffee dispensing device used in the method may be a ground coffee dispensing device according to any of the embodiments described herein.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 shows part of a coffee machine according to an example;
FIGs. 2A to 2C show a coffee brewing vessel and an outlet being moved relative to each other to a defined position that triggers opening of a shutter to permit delivery of ground coffee through the outlet and into the coffee brewing vessel; and
FIG. 3 shows a ground coffee dispensing device according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a ground coffee dispensing device for dispensing ground coffee into a coffee brewing vessel. The ground coffee dispensing device comprises a receptacle having an outlet through which ground coffee is deliverable from the receptacle. A shutter is movable between an open position that allows the ground coffee to be delivered via the outlet and a closed position that blocks delivery of ground coffee via the outlet. A position determination element is arranged to be triggered by the outlet and the coffee brewing vessel adopting a defined position relative to each other. A shutter mover is arranged to cause movement of the shutter from the closed position to the open position in response to the position determination element being triggered. The defined position permits delivery of ground coffee into the coffee brewing vessel when the shutter is in the open position. Further provided is a coffee machine comprising the ground coffee dispensing device.

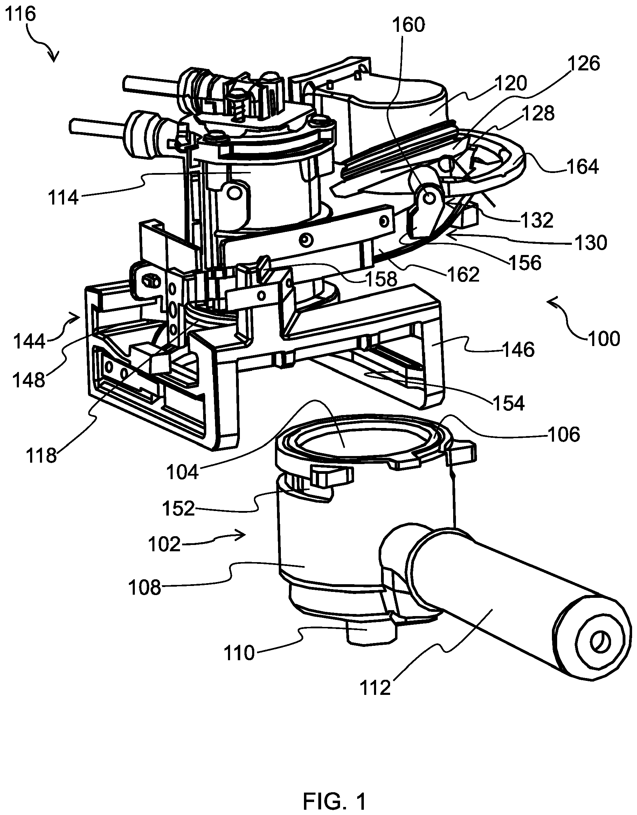

FIG. 1 shows a ground coffee dispensing device 100 according to an example. The ground coffee dispensing device 100 is for dispensing ground coffee into a coffee brewing vessel 102.

The coffee brewing vessel 102 may include a cavity 104 in which the ground coffee is receivable from the ground coffee dispensing device 100. The cavity 104 of the coffee brewing vessel 102 may be delimited by a wall 106 that extends around the cavity 104.

In at least some embodiments, the coffee brewing vessel 102 includes a filter-supporting portion 108 for supporting a filter, for example a filter comprising a perforate base on which the ground coffee is supportable when received in the cavity 104.

Such a filter may retain the ground coffee but allow brewed coffee to pass therethrough.

In some embodiments, such as shown in FIG. 1, the coffee brewing vessel 102 comprises a spout 110 through which brewed coffee is deliverable, e.g. into a cup or pot placed beneath the spout 110. Such a spout 110 may be arranged downstream of the filter.

In some embodiments, such as shown in FIG. 1, the coffee brewing vessel 102 is a portable component that is manipulable by a user separately from the ground coffee dispensing device 100. To this end, the coffee brewing vessel 102 may have a handle 112 for assisting the user to manipulate the coffee brewing vessel 102, for example to move the coffee brewing vessel 102 towards and away from the ground coffee dispensing device 100.

It is noted that the coffee brewing vessel 102 being a portable component and including the filter-supporting portion 108 may cause the coffee brewing vessel 102 to be regarded as a so-called portafilter.

Such a portafilter can be moved by the user to the ground coffee dispensing device 100 in order to receive ground coffee dispensed by the ground coffee dispensing device 100. The portafilter may also be moved by the user to a heated water dispenser 114 in order to receive heated water dispensed by such a heated water dispenser 114.

Any suitable type of heated water dispenser 114 can be contemplated provided that the heated water dispenser 114 is capable of dispensing heated water into the coffee brewing vessel 102. In some embodiments, the heated water dispenser 114 comprises a heater and a water flow path along which water is displaced by a pump through the heater in order for the water to be heated and delivered into the coffee brewing vessel 102.

In some embodiments, the heated water dispenser 114 is configured to dispense the heated water into the coffee brewing vessel 102 in response to a water pressure reaching or exceeding a threshold pressure, for example about 4 bar. Such a threshold pressure may, for example, be set according to the type of coffee, e.g. espresso, that is intended to be brewed in the coffee brewing vessel 102.

In such embodiments, one or more valves included in a hydraulic circuit of the heated water dispenser 114 may open in response to the threshold pressure being reached or exceeded.

It is noted at this point, with reference to FIG. 1, that the ground coffee dispensing device 100 may be included, together with the heated water dispenser 114, in a coffee machine 116 (although other possibilities are also conceivable, as described herein below).

The coffee brewing vessel 102, e.g. portafilter, may be included in the coffee machine 116. Owing to the possibility of the coffee brewing vessel 102, e.g. portafilter, being a portable component that is manipulable separately from other components of the coffee machine 116, it is also contemplated that the coffee machine 116 is provided to the user without the coffee brewing vessel 102. In this case, the coffee brewing vessel 102 may be already in the possession of the user, and/or acquirable by the user separately from the coffee machine 116.

In some embodiments, the coffee machine 116 comprises a coffee tamping piston 118 for tamping the ground coffee received in the coffee brewing vessel 102.

It is noted, for the avoidance of any doubt, that the term "tamping" refers to compressing, typically by downwardly pressing onto, the coffee grounds received in the coffee brewing vessel 102, e.g. portafilter. A denser mass of coffee grounds results from the tamping that provides more resistance to water flow therethrough than that provided by the coffee grounds prior to tamping.

Movement of the coffee tamping piston 118 in order to implement the tamping may be achieved in any suitable manner, for example by movement of the coffee tamping piston 118 being hydraulically or pneumatically controlled.

In some embodiments, such as shown in FIG. 1, the coffee tamping piston 118 is included in the heated water dispenser 114. In such embodiments, the coffee tamping piston 118, as well as tamping the coffee, may close the cavity 104 of the coffee brewing vessel 102 to define a brewing chamber to which the heated water is deliverable, e.g. via one or more openings defined in the coffee tamping piston 118.

Alternatively or additionally, the heated water dispenser's 114 hydraulic circuit may be configured to control movement, e.g. lowering, of the coffee tamping piston 118 towards the ground coffee received in the coffee brewing vessel 102.

In such embodiments, when the pressure inside the brewing chamber and in the hydraulic circuit reaches or exceeds the threshold pressure, for example about 4 bar, the heated water may be delivered into the brewing chamber. It is reiterated that such pressure-responsive heated water delivery may be implemented by, for example, opening of valve(s) in the hydraulic circuit.

It is noted that in embodiments in which the heated water dispenser's 114 hydraulic circuit is configured to control movement of the coffee tamping piston 118, the water employed for this purpose may not be guided through the heated water dispenser's 114 heater (in contrast to the water used for brewing coffee).

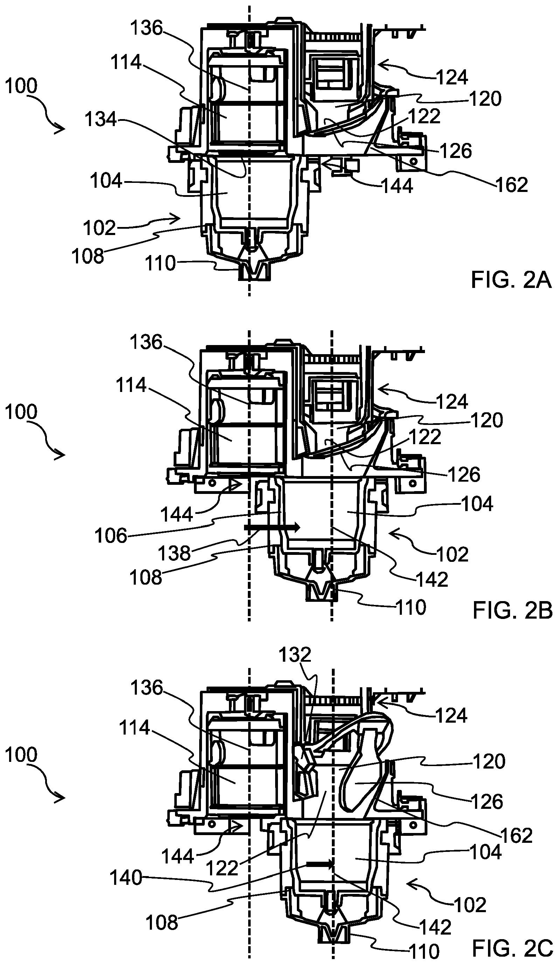

More generally, and referring now to FIGs. 1 and 2A to 2C, the ground coffee dispensing device 100 comprises a receptacle 120 having an outlet 122 through which ground coffee is deliverable from the receptacle 120.

The receptacle 120 may comprise, e.g. be in the form of, a chute through which the ground coffee is deliverable, e.g. at least partly by gravity.

Such a chute may terminate at a chute opening that defines the outlet 122 through which the ground coffee is deliverable from the chute into the coffee brewing vessel 102.

In at least some embodiments, such as shown in FIGs. 2A to 2C, the ground coffee dispensing device 100 comprises a coffee grinding assembly 124 for grinding coffee beans to provide the ground coffee that is deliverable from the receptacle 120, e.g. chute. In such embodiments, the receptacle 120 may extend beneath the coffee grinding assembly 124 to enable the ground coffee provided by the coffee grinding assembly 124 to be moved away therefrom at least partly by gravity.

As best shown in FIGs. 2A to 2C, the ground coffee dispensing device 100 comprises a shutter 126 movable between an open position that allows the ground coffee to be delivered via the outlet 122, as shown in FIG. 2C, and a closed position that blocks delivery of ground coffee via the outlet 122, as shown in FIGs. 2A and 2B.

The capability of the shutter 126 to block the outlet 122, e.g. chute opening, when adopting the closed position may assist to minimize or prevent unintentional egress of residual coffee grounds from the receptacle 120 and concomitant pollution of the ground coffee dispensing device 100, a coffee machine 116 in which the ground coffee dispensing device 100 may be included, and/or an area surrounding the ground coffee dispensing device 100.

Any residual coffee grounds collected on the shutter 126 when the shutter 126 is in the closed position may be delivered into the coffee brewing vessel 102 when the shutter 126 subsequently adopts the open position. The manner in which the shutter 126 is controlled to open and close will be described in more detail herein below.

It is noted that the shutter 126 may serve an additional purpose in embodiments in which the ground coffee dispensing device 100 is included in a coffee machine 116 together with the heated water dispenser 114, or at least when such a heated water dispenser 114 is being operated proximal to the ground coffee dispensing device 100. In this respect, the shutter 126 may assist to restrict ingress of steam into the receptacle 120, e.g. towards the above-described coffee grinding assembly 124. By limiting passage of moisture into the receptacle 120 in this manner, reliability of ground coffee delivery may be enhanced.

To this end, the ground coffee dispensing device 100 may include a sealing member, e.g. a gasket made from an elastomeric material, e.g. silicone rubber, arranged to provide a seal between the shutter 126 and the receptacle 120 when the shutter 126 is in the closed position.

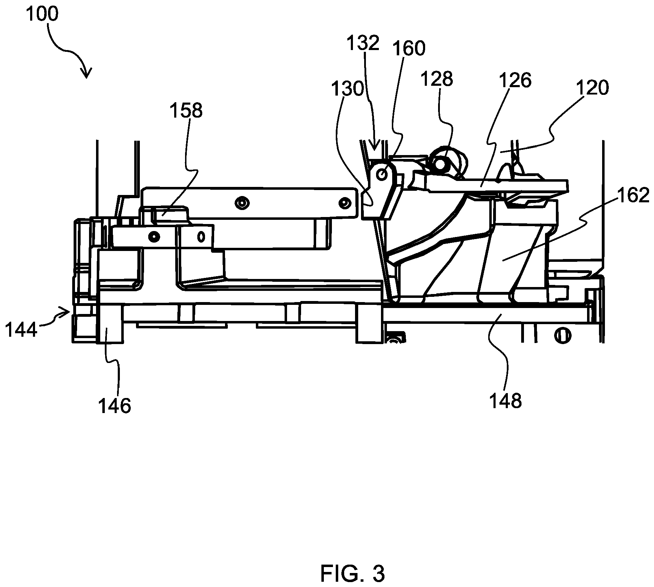

In at least some embodiments, and referring to FIGs. 1 and 3, the ground coffee dispensing device 100 comprises a biasing element 128 arranged to bias the shutter 126 into the closed position.

Thus, the default position adopted by the shutter 126 may be the closed position. In this way, unintentional egress of residual coffee grounds from the receptacle 120 and, for example, steam ingress into the receptacle 120 may be minimized or prevented when the ground coffee dispensing device 100 is not being employed to dispense ground coffee into the coffee brewing vessel 102.

Any suitable type of biasing element 128 can be contemplated for biasing the shutter 126 into the closed position. In some embodiments, such as shown in FIGs. 1 and 3, the biasing element 128 comprises, e.g. is in the form of, a spring.

The spring used as the biasing element 128 can be of any suitable type. In some embodiments, the spring is a torsion spring. Such a torsion spring may be particularly suitable in embodiments, such as shown in FIGs. 1, 2A to 2C and 3, in which the shutter 126 is pivotable between the open position and the closed position.

Other types of spring can be contemplated for the purpose of biasing the shutter 126 into the closed position, and can for example be selected according to the manner in which the shutter 126 is movable between the open and closed positions.

More generally, the ground coffee dispensing device 100 according to the present disclosure comprises a position determination element 130 arranged to be triggered by the outlet 122 of the receptacle 120 and the coffee brewing vessel 102 adopting a defined position relative to each other, and a shutter mover 132 arranged to cause movement of the shutter 126 from the closed position to the open position in response to the position determination element 130 being triggered. As shown in FIG. 2C, the defined position of the outlet 122 and the coffee brewing vessel 102 relative to each other, and the shutter 126 being in the open position permits delivery of ground coffee into the coffee brewing vessel 102.

Thus, the delivery of ground coffee via the outlet 122 may be implemented according to a defined, e.g. pre-set, spatial relationship between the outlet 122 and the coffee brewing vessel 102.

In particular, pollution of the ground coffee dispensing device 100, a coffee machine 116 in which the ground coffee dispensing device 100 may be included, and/or an area surrounding the ground coffee dispensing device 100 by coffee grounds may be alleviated due to the movement of the shutter 126 from the closed position to the open position being contingent on adoption of the defined position of the outlet 122 and the coffee brewing vessel 102 relative to each other.

In some embodiments, such as shown in FIG. 2C, the defined position comprises alignment of the wall 106 that extends around the cavity 104 with a (further) wall of the receptacle 120 that delimits the outlet 122 so that the wall 106 and the further wall guide the ground coffee delivered from the receptacle 120 into the cavity 104.

This alignment between the wall 106 and the further wall may assist to minimize or prevent pollution of the ground coffee dispensing device 100, a coffee machine 116 in which the ground coffee dispensing device 100 may be included, and/or an area surrounding the ground coffee dispensing device 100 by coffee grounds.

In some embodiments, such as shown in FIGs. 2A to 2C, arrangement of the coffee brewing vessel 102 relative to the heated water dispenser 114 and relative to the ground coffee dispensing device 100 is configurable to enable switching between a ground coffee dispensing configuration and a coffee brewing configuration.

In the coffee brewing configuration, a water outlet 134 of the heated water dispenser 114 and the coffee brewing vessel 102 are positioned relative to each other, e.g. in a "brew position", so that heated water is deliverable into the coffee brewing vessel 102.

In the ground coffee dispensing configuration, the coffee brewing vessel 102 and the outlet 122 of the receptacle 120 adopt the defined position, which can be regarded as a "fill position" because the ground coffee is able to the fill the coffee brewing vessel 102.

The shutter 126 may be fully open when the coffee brewing vessel 102, e.g. portafilter, is in the fill position (or "grind position" in embodiments in which the coffee grinding assembly 124 is included in the ground coffee dispensing device 100), and fully closed as soon as the coffee brewing vessel 102 is out of, in other words displaced from, the fill position.

In some embodiments, such as shown in FIG. 2A, the coffee brewing configuration comprises alignment of a central heated water delivery axis 136 of the heated water dispenser 114 that extends through a center of the water outlet 134 or coffee tamping piston 118 and a central axis of the coffee brewing vessel 102 which passes through a center of the cavity 104.

In this coffee brewing configuration, or in any other arrangement in which the coffee brewing vessel 102 is spatially removed from the defined position, the shutter 126 may remain closed, for example due to the biasing element 128 biasing the shutter 126 into the closed position.

FIG. 2B shows the defined position being approached, which in this particular non-limiting example is by the coffee brewing vessel 102 moving towards the outlet 122, as indicated by the arrow 138. Note that the defined position is not yet reached in the scenario shown in FIG. 2B and hence the shutter 126 remains in the closed position because the position determination element 130 remains untriggered.

FIG. 2C shows the defined position being reached, in this particular example by the final movement of the coffee brewing vessel 102 into alignment with the outlet 122, as indicated by the arrow 140. Upon reaching the defined position, the position determination element 130 is triggered and the shutter mover 132 correspondingly moves the shutter 126 to the open position, as previously described.

In some embodiments, such as shown in FIG. 2C, the defined position comprises alignment of a central ground coffee delivery axis 142, defined through a center of the outlet 122, with the central axis of the coffee brewing vessel 102.

This axial alignment can assist to minimize or prevent pollution of the ground coffee dispensing device 100, a coffee machine 116 in which the ground coffee dispensing device 100 may be included, and/or an area surrounding the ground coffee dispensing device 100 by coffee grounds.

In at least some embodiments, relative movement of the coffee brewing vessel 102 and the outlet 122 so that the defined position is no longer adopted, for example by moving the coffee brewing vessel 102 away from the outlet 122 following delivery of the ground coffee into the coffee brewing vessel 102, causes the shutter 136 to adopt the closed position. The latter can, for example, be implemented via the above-described biasing element 128.

In some embodiments, the shutter mover 132 is arranged such that during relative movement of the coffee brewing vessel 102 and the outlet 122 away from the defined position, the shutter 126 is closed completely while the coffee brewing vessel 102 and the outlet 122 are still positioned to enable the ground coffee to be delivered into the coffee brewing vessel 102.

This may assist to minimize the risk of spillage of coffee grounds.

For instance, when the coffee brewing vessel 102, e.g. portafilter, is moved back, in other words away from the fill position, the shutter 126 may be closed completely when the coffee brewing vessel 102 is still underneath the outlet 122 of the receptacle 120, e.g. chute.

The nature of the relative movement of the coffee brewing vessel 102 and the outlet 122 in order to reach the defined position is not particularly limited. In some embodiments, such as shown in FIGs. 2A to 2C, the coffee brewing vessel 102 is displaced, e.g. displaced in a horizontal plane, towards the outlet 122 while the outlet's 122 position remains fixed. However, alternative possibilities can be contemplated provided that the position determination element 130 can be appropriately configured to determine adoption of the defined position of the coffee brewing vessel 102 and outlet 122 relative to each other.

In some embodiments, the coffee brewing vessel 102, e.g. portafilter, may rotate, e.g. about its central axis, in order to reach the defined position.

Alternatively or additionally, the coffee brewing vessel 102, e.g. portafilter, may be displaced upwardly or downwardly, e.g. while the outlet's 122 elevation remains fixed, in order to reach the defined position.

In other embodiments, the coffee brewing vessel 102 may not itself be required to move in order for the defined position to be adopted. For example, the coffee brewing vessel's 102 position may be fixed, e.g. by the coffee brewing vessel 102 being statically mountable in the coffee machine 116, and the receptacle 120 may be movable to bring the outlet 122 to the defined position.

Such movement of the receptacle 120 can be implemented in any suitable manner. In some embodiments, the receptacle 120, e.g. chute, is pivotably mounted, with pivoting of the receptacle 120, e.g. chute, towards the coffee brewing vessel 102 enabling adoption of the defined position.

In such embodiments, movement, e.g. pivoting, of the receptacle 120 away from the defined position may be for the purpose of, for example, providing space for a coffee tamping piston 118 to approach the mounted coffee brewing vessel 102 in order to implement tamping of the ground coffee received in the coffee brewing vessel 102.

In some embodiments, and referring again to FIGs. 1, 2A to 2C and 3, the ground coffee dispensing device 100 comprises a guiding assembly 144 configured to guide movement of the coffee brewing vessel 102 and the outlet 122 relative to each other in order to bring the coffee brewing vessel 102 and the outlet 122 into the defined position.

Such a guiding assembly 144 may provide a convenient way of facilitating arrangement of the outlet 122 and the coffee brewing vessel 102 in the defined position.

In some embodiments, the guiding assembly 144 is configured to guide movement of the coffee brewing vessel 102 relative to the outlet 122 of the receptacle 120 and relative to the water outlet 134 of the heated water dispenser 114 to enable switching between the ground coffee dispensing configuration and the coffee brewing configuration.

The guiding assembly 144 can be configured in any suitable manner in order to guide movement of the coffee brewing vessel 102 and the outlet 122 relative to each other.

In some embodiments, such as shown in FIGs. 2A to 2C, the guiding assembly 144 is configured to guide movement of the coffee brewing vessel 102 relative to a fixed position of the outlet 122.

Alternatively, the guiding assembly 144 may be configured to guide movement of the receptacle 120 relative to a fixed position of the coffee brewing vessel 102 in order to bring the outlet 122 and the coffee brewing vessel 102 into the defined position relative to each other.

In some embodiments, such as shown in FIGs. 1, 2A to 2C and 3, the guiding assembly 144 comprises a carrier 146 for carrying the coffee brewing vessel 102, and a carrier movement assembly for guiding the carrier 146, together with the coffee brewing vessel 102, towards the outlet 122. In such embodiments, the carrier movement assembly may include runner(s) and/or rail(s) 148 for enabling sliding movement of the carrier 146.

The coffee brewing vessel 102, e.g. portafilter, may be received in the carrier 146 in any suitable manner. In some embodiments, and as best shown in FIG. 1, one or more grooves 152 may be defined in the coffee brewing vessel 102, e.g. in an exterior surface of the coffee brewing vessel 102, with the carrier 146 comprising protrusion(s) 154 that engage with the groove(s) 152 when the coffee brewing vessel 102 is received in the carrier 146 in order to secure the coffee brewing vessel 102 to the carrier 146.

It is noted that the groove(s) 152 and the protrusion(s) 154 can be included in a bayonet-type coupling between the coffee brewing vessel 102 and the carrier 146. Numerous alternative ways of receiving and securing the coffee brewing vessel 102 in the carrier 146 can be contemplated, such as protrusion(s) protruding from the external surface of the coffee brewing vessel 102, with such protrusion(s) being receivable in groove(s) defined in the carrier 146, and so on.

In alternative embodiments, the carrier 146 is omitted. For example, the coffee brewing vessel 102 may itself be slidable along runner(s) and/or rail(s) 148 included in the guiding assembly 144.

More generally, any form of movement may be guided by the guiding assembly 144 provided that the coffee brewing vessel 102 and/or the outlet 122 can be guided so as to adopt the defined position. In some embodiments, such as shown in FIGs. 1, 2A to 2C and 3, the movement guided by the guiding assembly 144 comprises translational movement of the coffee brewing vessel 102 and the outlet 122 relative to each other. Such a translational movement may comprise a linear translational movement and/or an arcuate translational movement.

In a non-limiting example, the guiding assembly 144 comprises curved rails 148 that form a circle segment in a horizontal plane, with the center point of the curvature of the rails 148 lying distal with respect to a circumference of the wall 106 of the coffee brewing vessel 102, e.g. portafilter. In such an example, a lateral movement with a (slight) rotation of the carrier 146 between the brew position and the fill position may be evident to the user standing in front of the guiding assembly 144.

In some embodiments, the ground coffee dispensing device 100 includes a sensing system arranged to detect approach of the coffee brewing vessel 102 and/or the carrier 146 towards the fill position, and a controller configured to activate the coffee grinding assembly 124 to grind coffee beans based on the sensor detecting this approach.

In such embodiments, the coffee brewing vessel 102 or the carrier 146 may include a magnet, with the sensing system comprising a Hall sensor for detecting approach of the coffee brewing vessel 102 and/or the carrier 146 towards the fill position via detection of the magnet's magnetic field.

In some embodiments, the controller may be triggered by a signal from the sensing system, e.g. Hall sensor, to activate the coffee grinding assembly 124 to grind coffee beans, but with a delay for allowing the coffee brewing vessel 102 and/or the carrier 146 to reach the fill position. For example, a 0.5 to 1 second delay may be implemented by the controller.

Turning to the position determination element 130 and the shutter mover 132, these components can have any suitable design provided that the position determination element 130 is triggerable by, in other words in response to, the outlet 122 and the coffee brewing vessel 102 adopting the defined position relative to each other, and the shutter mover 132 is capable of moving the shutter 126 from the closed position to the open position in response to the position determination element 130 being triggered.

In some embodiments, the position determination element 130 comprises a sensor for sensing adoption of the defined position, and a controller adapted to control the shutter mover 132, e.g. an electromechanical shutter actuator, to move the shutter 126 from the closed position to the open position based on data from the sensor being indicative of adoption of the defined position.

In such embodiments, any suitable sensor may be employed for the position determination element 130. For example, an optical sensor arranged to optically sense adoption of the defined position, e.g. by a light beam being interrupted by the coffee brewing vessel 102 and/or the receptacle 120 reaching a position corresponding to the defined position.

In other embodiments, such as shown in FIGs. 1, 2A to 2C and 3, the position determination element 130 and the shutter mover 132 are arranged to mechanically determine adoption of the defined position and move the shutter 126 from the closed position to the open position. Such a mechanically-implemented position determination and shutter 126 actuation may be more cost-effective to implement than, for example, the above-described solution utilizing a sensor- and controller-comprising position determination element 130, and an electromechanical shutter actuator.

In some embodiments, such as shown in FIGs. 1, 2A to 2C and 3, the position determination element 130 comprises a lever member 156. In such embodiments, the shutter mover 132 may be arranged to cause movement of the shutter 126 from the closed position to the open position in response to movement of the lever member 156 caused by adoption of the defined position. This may provide a relatively simple and cost-effective way of implementing the position determination element 130 and the shutter mover 132.

In some embodiments, and as best shown in FIGs. 1 and 3, the guiding assembly 144 comprises a contact portion 158 arranged to bear against an activation point of the lever member 156 when the outlet 122 and the coffee brewing vessel 102 adopt the defined position.

In such embodiments, the contact portion 158 may be included in the carrier 146 and arranged to bear against the lever member 156 when the carrier 146 carrying the coffee brewing vessel 102 reaches a position in which the outlet 122 and the coffee brewing vessel 102 adopt the defined position relative to each other.

In alternative embodiments, the contact portion 158 may be included in the coffee brewing vessel 102 itself. In such embodiments, the coffee brewing vessel-comprising contact portion may bear against the lever member's 156 activation point when the coffee brewing vessel 102 is positioned so that the outlet 122 and the coffee brewing vessel 102 adopt the defined position relative to each other.

In some embodiments, such as shown in FIGs. 1, 2A to 2C and 3, the shutter mover 132 comprises a pivot 160 arranged to enable pivoting of the shutter 126 to open and close the outlet 122. This may provide a relatively straightforward and reliable way of moving the shutter 126.

A pivot point of the pivot 160 may be selected to ensure that movement of the shutter 126 does not interfere with the coffee brewing vessel 102, e.g. portafilter, nor with the ground coffee "pyramid" dispensed into the coffee brewing vessel 102.

As previously noted, a biasing element 128, e.g. a spring, may be arranged to bias the shutter 126 into the closed position. In such embodiments, the position determination element 130 and the shutter mover 132 may be arranged to enable the bias to be overcome when the outlet 122 and the coffee brewing vessel 102 adopt the defined position.

The biasing element 128, e.g. return spring, may ensure that the shutter 126 is closed if the coffee brewing vessel 102, e.g. portafilter, is not in the fill position (or not in the grinding position, in embodiments in which the ground coffee dispensing device 100 comprises the coffee grinding assembly 124).

In some embodiments, and as best shown in FIG. 1, the biasing element 128, e.g. spring, is arranged to bias rotation of the shutter 126 about the pivot 160 into the closed position. In such embodiments, the biasing of the shutter 126 into the closed position may be overcome by movement of the lever member 156, e.g. when the contact portion 158 bears against the lever member 156. Such movement of the lever member 156 may cause pivoting of the shutter 126 about the pivot 160, against the bias provided by the biasing element 128, thereby to expose the outlet 122.

It is noted at this point that the inclusion of a position determination element 130 and a shutter mover 132 can be directly and positively verified even in the absence of the coffee brewing vessel 102 by observation of design features, such as those described above, that enable the positioning-responsive opening of the shutter 126.

When the shutter 126 is in the open position, the ground coffee is deliverable into the coffee brewing vessel 102, e.g. portafilter, as previously described. In some embodiments, the ground coffee dispensing device 100 includes a lower chute element 162 arranged between the outlet 122 and the coffee brewing vessel 102 when the defined position is adopted.

The lower chute element 162 may assist to guide the ground coffee into the coffee brewing vessel 102, e.g. portafilter.

As an alternative or in addition to the lower chute element 162, the ground coffee dispensing device 100 may include pollution shielding 164 arranged around the receptacle 120 proximal to the outlet 122.

The pollution shielding 164 may act as a physical barrier to coffee grounds, to prevent any coffee grounds that have escaped from the outlet 122 but not received in the coffee brewing vessel 102 from being transported too far away from the receptacle 120.

It is generally noted that the coffee brewing vessel 102 may be manually movable by the user, e.g. while being guided by the guiding assembly 144, and/or may be movable by a suitable movement mechanism, e.g. an electric and/or hydraulic movement mechanism, for driving movement of the coffee brewing vessel 102 and/or the receptacle 120/outlet 122 towards each other to adopt the defined position.

In some embodiments, and irrespective of how movement of the coffee brewing vessel 102 is implemented, the ground coffee dispensing apparatus 100 includes a locking mechanism configured to retain the coffee brewing vessel 102 and the outlet 122 at the defined position relative to each other while the ground coffee is being delivered into the coffee brewing vessel 102. This may further assist in minimizing or avoiding of coffee grounds pollution because the locking mechanism may mitigate the risk of relative movement away from the defined position while the ground coffee is being delivered into the coffee brewing vessel 102.

In some embodiments, the locking mechanism comprises a retractable pin arranged to retain the carrier 146 in a position that enables the coffee brewing vessel 102 carried by the carrier 146 to adopt the defined position relative to the outlet 122. The pin may be retracted/released in any suitable manner, e.g. hydraulically.

In some embodiments, movement of the coffee brewing vessel 102 and/or the carrier 146 to the fill position, e.g. from the brew position, may cause tensioning of a resilient member, e.g. a spring. Release of the tension in the resilient member may drive the coffee brewing vessel's 102 and/or the carrier's 146 return to the brew position.

The resilient member may return the coffee brewing vessel 102 and/or the carrier 146 to the brew position, when, for example, the locking mechanism releases the coffee brewing vessel 102 and/or the carrier 146, e.g. via retraction of the pin.

The return movement may, for example, be dampened by suitable damping means to prevent ground coffee in the coffee brewing vessel 102 from becoming unevenly distributed or being spilled from the coffee brewing vessel 102 during transit back to the brew position.

The controller may be configured to operate/activate the coffee grinding assembly 124 for a fixed amount of time, e.g. 8 to 10 seconds. Such a fixed amount of time may be empirically determined. Alternatively or additionally, the ground coffee dispensing device 100 may include an additional sensor, for example an optical sensor, e.g. light gate-type sensor, for providing feedback on grinding. In such embodiments, the controller may adjust the amount of time during which the coffee grinding assembly 124 is activated based on the feedback.

In this way, variations associated with the coffee grinding assembly 124 and/or the coffee beans that can cause inaccurate dosing may be accounted for.

When the coffee grinding assembly 124 is deactivated to stop grinding the coffee beans, the controller may control the locking mechanism to release the coffee brewing vessel 102 and/or the carrier 146, to enable the coffee brewing vessel 102 and/or the carrier 146 to return to the fill position, e.g. by action of the resilient member.

In such embodiments, the controller may control a pump, e.g. the pump included in the hydraulic circuit of the heated water dispenser 114, to pump water from a water reservoir to a hydraulic valve that includes a piston connected to the pin. This may cause retraction of the pin, thus unlocking the coffee brewing vessel 102 and/or the carrier 146 to allowing it or them to return to the brew position by action of the resilient member.

When the coffee brewing vessel 102 and/or the carrier 146 reaches the brew position, this may be detected by a further sensing system, e.g. a (further) Hall sensor. The signal from the further sensing system that indicates return to the brew position may be used by the controller as a basis on which to operate, e.g. continue operation of, the pump.

In such embodiments, this pump operation may cause water from a water reservoir to be pumped towards the coffee tamping piston 118. Tamping of the ground coffee in the coffee brewing vessel 102 may then ensue, following by delivery of the heated water, as previously described.

In some embodiments, the controller controls the pump time during which heated water is delivered to the coffee brewing vessel 102 based on information received from a flow meter.

When the desired volume of water, e.g. as indicated using the information received from the flow meter, has been pumped to the brew chamber, the pump may stopped.

The controller may be configured to control an electronic valve to allow water used to move the coffee tamping piston 118 to flow back to the water reservoir. In this way, pressure exerted by the coffee tamping piston 118 on the coffee grounds in the coffee brewing vessel 102 can be released.

In such embodiments, retraction of the coffee tamping piston 118 may be assisted by recovery of a resilient element, e.g. spring, that is pretensioned by the initial movement of the coffee tamping piston 118 that causes tamping of the ground coffee received in the coffee brewing vessel 102.

The controller may be configured to implement a time delay, e.g. of about 10 seconds, between stopping heated water delivery to the brew chamber and controlling the electronic valve to allow water used to move the coffee tamping piston 118 to flow back to the water reservoir. As well as allowing time for pressure in the brew chamber to decrease, this time delay may permit water to be released/pressed from the puck of coffee grounds. It is noted that the above-mentioned 10 seconds time delay has been empircally determined.

The coffee brewing vessel 102 may then be emptied in order to start a new brew cycle. In the case of the coffee brewing vessel 102 being a portafilter, such a portafilter may first be removed from the coffee machine 116 and the used coffee grounds therein emptied.

More generally, a method is provided for dispensing ground coffee into a coffee brewing vessel 102 using a ground coffee dispensing device 100 that comprises a receptacle 120 having an outlet 122, a movable shutter 126, a position determination element 130, and a shutter mover 132. The method comprises bringing the coffee brewing vessel 102 and the outlet 122 into a defined position relative to each other in order to trigger the position determination element 130, with triggering of the position determination element 130 causing the shutter mover 132 to move the shutter 126 from a closed position to an open position so that the ground coffee is dispensed into the coffee brewing vessel.

It is noted that whilst the ground coffee dispensing device 100 is shown in FIG. 1 as part of a coffee machine 116, e.g. a (hybrid) espresso machine comprising an integrated coffee grinding assembly 124 and a manually operable portafilter as the coffee brewing vessel 102, this is not intended to be limiting. In some embodiments, the ground coffee dispensing device 100 is not included in such a coffee machine 116. For example, the ground coffee dispensing device 100 may be a standalone device.

Such a standalone ground coffee dispensing device 100 may, for example, comprise the coffee grinding assembly 124. This may mean that the ground coffee dispensing device 100 is implementable as a standalone coffee grinding and ground coffee dispensing device 100.

In other embodiments, the ground coffee dispensing device 100 may be included in a fully automatic coffee machine, e.g. espresso machine, in which the coffee brewing vessel 102 is automatically, rather than manually, movable. In such a coffee machine 116, the coffee brewing vessel 102 or the receptacle/chute 120 may, for instance, be automatically movable by an electric and/or hydraulic movement mechanism included in the coffee machine 116.

Such movement mechanism(s) may, for instance, move the coffee brewing vessel 102 from the fill position beneath the outlet 122 to a brew position that is spatially removed from the fill position.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A ground coffee dispensing device (100) for dispensing ground coffee into a coffee brewing vessel (102), the ground coffee dispensing device comprising:
a receptacle (120) having an outlet (122) through which ground coffee is deliverable from the receptacle;
a shutter (126) movable between an open position that allows the ground coffee to be delivered via the outlet and a closed position that blocks delivery of ground coffee via the outlet;
a position determination element (130) arranged to be triggered by the outlet and the coffee brewing vessel adopting a defined position relative to each other; and
a shutter mover (132) arranged to cause movement of the shutter from the closed position to the open position in response to the position determination element being triggered, the defined position and the shutter being in the open position permitting delivery of ground coffee into the coffee brewing vessel via the outlet.

2. The ground coffee dispensing device (100) according to claim 1, comprising a guiding assembly (144) configured to guide movement of the coffee brewing vessel (102) and the outlet (122) relative to each other in order to bring the coffee brewing vessel and the outlet into the defined position.

3. The ground coffee dispensing device (100) according to claim 2, wherein the movement guided by the guiding assembly (144) comprises translational movement of the coffee brewing vessel (102) and the outlet (122) relative to each other.

4. The ground coffee dispensing device (100) according to claim 3, wherein the translational movement comprises a linear translational movement and/or an arcuate translational movement.

5. The ground coffee dispensing device (100) according to any one of claims 2 to 4, wherein the guiding assembly (144) is configured to guide movement of the coffee brewing vessel (102) relative to a fixed position of the outlet (122).

6. The ground coffee dispensing device (100) according to any one of claims 1 to 5, wherein the position determination element (130) comprises a lever member (156), the shutter mover (132) being arranged to cause movement of the shutter (126) from the closed position to the open position in response to movement of the lever member caused by adoption of the defined position.

7. The ground coffee dispensing device (100) according to claim 6 when dependent on any one of claims 2 to 5, wherein the guiding assembly (144) comprises a contact portion (158) arranged to bear against the lever member (156) when the outlet (122) and the coffee brewing vessel (102) adopt the defined position.

8. The ground coffee dispensing device (100) according to any one of claims 1 to 7, wherein the shutter mover (132) comprises a pivot (160) arranged to enable pivoting of the shutter (126) to open and close the outlet (122).

9. The ground coffee dispensing device (100) according to any one of claims 1 to 8, comprising a biasing element (128) arranged to bias the shutter (126) into the closed position, the position determination element (130) and the shutter mover (132) being arranged to enable the bias to be overcome when the outlet (122) and the coffee brewing vessel (102) adopt the defined position.

10. The ground coffee dispensing device (100) according to any one of claims 1 to 9, comprising a coffee grinding assembly (124) for grinding coffee beans to provide the ground coffee that is deliverable from the receptacle (120).

11. The ground coffee dispensing device (100) according to any one of claims 1 to 10, comprising the coffee brewing vessel (102).

12. The ground coffee dispensing device (100) according to claim 11, wherein the coffee brewing vessel (102) comprises a cavity (104) in which the ground coffee is receivable, and a wall (106) extending around the cavity, and wherein the outlet (122) is delimited by a further wall, the defined position comprising alignment of the wall (106) and the further wall so that the wall and the further wall guide the ground coffee delivered from the receptacle into the cavity.

13. A coffee machine (116) comprising:
a heated water dispenser (114); and
the ground coffee dispensing device (100) according to any one of claims 1 to 12.

14. The coffee machine (116) according to claim 13, wherein arrangement of the coffee brewing vessel (102) relative to the heated water dispenser (114) and relative to the ground coffee dispensing device (100) is configurable to enable switching between:
a ground coffee dispensing configuration in which the coffee brewing vessel and the outlet (122) of the receptacle (120) adopt the defined position; and
a coffee brewing configuration in which a water outlet (134) of the heated water dispenser (114) and the coffee brewing vessel are positioned relative to each other so that heated water is deliverable into the coffee brewing vessel.

15. The coffee machine (116) according to claim 14, wherein the ground coffee dispensing device (100) is according to any one of claims 2 to 5 and 7, and wherein the guiding assembly (144) is configured to guide movement of coffee brewing vessel (102) relative to the outlet (122) of the receptacle (120) and relative to the water outlet (134) of the heated water dispenser (114) to enable switching between the ground coffee dispensing configuration and the coffee brewing configuration.
